# EUROPEAN PATENT APPLICATION

(11) **EP 1 411 448 A2**
(43) Date of publication of application: **21.04.2004**
(21) Application number: 03256518.6
(22) Date of filing: 16.10.2003
(51) Int. Cl.: G06F 17/30

(54) **Data searching apparatus**

(30) Priority: 17.10.2002 JP 2002303507
(71) Applicant: MATSUSHITA ELECTRIC INDUSTRIAL CO., LTD., Kadoma-shi, Osaka 571-8501 (JP)
(72) Inventor: Ishiguro, Yasuo, Suita-shi Osaka 565-0874 (JP); Arikado, Ryuichi, Hirakata-shi Osaka 573-0124 (JP); Saito, Shu, Osaka-shi Osaka 536-0012 (JP); Aoki, Kouhei, Osaka-shi Osaka 532-0025 (JP)
(74) Representative: Butcher, Ian James

(57) **Abstract**

A data searching apparatus searches a database of data files for a desired data file, based on a search condition set by a user. Each data file includes a plurality of search keys for providing clues to know data file contents. A receiving unit receives a search condition from the user. A searching unit searches the database for at least one data file that satisfies the search condition received by the receiving unit. An extracting unit extracts a plurality of search keys from the data file that is a search result by the searching unit. The searching unit further searches the database for at least one data file that includes at least one of the search keys extracted by the extracting unit.

## Description

### BACKGROUND OF THE INVENTION

### (1) Field of the Invention

The present invention relates to a data searching apparatus that searches for various pieces of data, and particularly relates to a technique for promoting the efficiency of searching operations.

### (2) Related Art

Data searching apparatuses searching for various pieces of data typically receive the user input of search conditions such as a number and a keyword, and search for data files matching the input number or data files including the input keyword.

As one example, a patent search system employs a large number of fields as its search conditions. The fields include: data type indicating one of a patent, a utility model, a design, and a trademark; IPC ("International Patent Classification" providing 68,591 classifications according to the seventh edition); FI ("File Index", developed by the Japanese Patent Office as sub-classifications of the IPC, to be updated at an interval of about one year); F-term ("File Forming Term" providing more than 200,000 technical classifications, particularly developed for mechanical searching); application number; publication number; international application number; international publication number; registration number; priority application number; related patent application number; trial number; filing date; publication date; registration date; name of the inventor; name of the applicant; name of each right holder; title of the invention; and keyword.

Patent data referred to herein intends to include data of various publications and documents relating to patents, utility models, designs, and trademarks, data of foreign publications and publications of decision on trial, and other useful information about intellectual rights such as information about examination procedures.

For data searching apparatuses, finding appropriate search conditions is of prime importance. Without appropriate search conditions, the searching for desired data files often ends in failure.

To find a desired data file from a large number of data files, the user first sets a search condition and then searches for the desired file using the set search condition. If failing to find the desired data file, the user sets another search condition based on the search results. In many cases, the user is required to repeat such trial and error searching operations before finally finding the desired data file.

Japanese Laid-Open Patent Application No. 2000-123021 (see Abstract and Selected Figure) discloses one conventional search system where search results of the database are recorded for each user so that the search records can later be referred to by each user.

However, a first problem lies in that conventional data searching apparatuses lack effective methods for finding appropriate search conditions.

Another problem lies in that all users in the patent search system are not necessarily patent experts who are daily engaged in patent-related operations. Some users in the patent search system may be inexpert users like inventors who only sometimes file patent applications.

In the patent search system, effectively searching a huge database of data files to find a desired data file with high accuracy is a difficult task even for expert users. Inexpert users therefore may find it too difficult to even perform the patent database searching.

To be specific, inexpert users may be unfamiliar with such classification symbols as IPC, FI, and F-term employed in the patent search system. Such inexpert users therefore rarely use these classification symbols but mainly use keywords as their search conditions. With tens to hundreds of thousands of such classification symbols being available, even expert users rarely have knowledge of all the classification symbols. Accordingly, such classification symbols are far from being fully utilized as search conditions.

### SUMMARY OF THE INVENTION

In view of the above problems, the object of the present invention is to provide a data searching apparatus, a data searching method, and a data searching program for aiding users in finding appropriate search conditions and thereby enabling even inexpert users to perform data searching and improving the accuracy of searching as compared with conventional cases.

The above object of the present invention can be achieved by a data searching apparatus that searches a database of data files for a desired data file, based on a search condition set by a user, each data file including a plurality of search keys for providing clues to know data file contents, including : a receiving unit operable to receive a search condition from the user; a searching unit operable to search the database for at least one data file that satisfies the search condition received by the receiving unit; and an extracting unit operable to extract a plurality of search keys, from the data file that is a search result by the searching unit, wherein the searching unit further searches the database for at least one data file that includes at least one of the search keys extracted by the extracting unit.

The above object of the present invention can also be achieved by a data searching method for searching a database of data files for a desired data file, based on a search condition set by a user, each data file including a plurality of search keys for providing clues to know data file contents, the method including: a receiving step of receiving a search condition from the user; a searching step of searching the database for at least one data file that satisfies the search condition received in the receiving step; and an extracting step of extracting a plurality of search keys, from the data file that is a search result in the searching step, wherein in the searching step, the database is further searched for at least one data file that includes at least one of the search keys extracted in the extracting step.

The above object of the present invention can also be achieved by a computer program to be executed on a computer for searching a database of data files for a desired data file, based on a search condition set by a user, each data file including a plurality of search keys for providing clues to know data file contents, the program including: a receiving step of receiving a search condition from the user; a searching step of searching the database for at least one data file that satisfies the search condition received in the receiving step; and an extracting step of extracting a plurality of search keys, from the data file that is a search result in the searching step, wherein in the searching step, the database is further searched for at least one data file that includes at least one of the search keys extracted in the extracting step.

According to these, search keys are extracted from data files that have resulted from searching, and then next searching for data files can be performed using the extracted search keys. In this way, the apparatus can aid the user in finding appropriate search conditions.

Accordingly, even inexpert users can perform data searching and the accuracy of searching can be improved as compared with conventional cases.

Further, repeating such operations can refine the search and can improve searchability of desired data. Therefore, the accuracy of searching is improved, and searching for a desired data file becomes easy.

For example, even inexpert users who are unfamiliar with such classification symbols as IPC, FI, and F-term employed in the patent search system can first perform keyword searching and then extract, as search keys, these classification symbols from data files that have resulted from the keyword searching. The inexpert users can then perform next searching for data files based on the extracted classification symbols. Further, expert users can fully utilize the classification symbols because the expert users can use, in searching for data files, even classification symbols that have been unfamiliar to them.

Here, the extracting unit may include: a data-file-list displaying unit operable to display a list of data files that are search results by the searching unit; a file-selection receiving unit operable to receive, from the user, selection of a data file from the list displayed by the data-file-list displaying unit; and a selective extracting unit operable to extract search keys, from the data file selected in the file-selection receiving unit.

According to this, the user can extract search keys only from data files selected by the user. Therefore, the user can easily find appropriate search conditions.

Also, input of such data files can be made by a simple user operation of selecting the data files with reference to the list of data files that have resulted from the searching. This represents improved operability and enables easy ref ining of search. Accordingly, even inexpert users can easily set search conditions.

Here, the file-selection receiving unit may receive, from the user, selection of a plurality of data files one after another from the list displayed by the data-file-list displaying unit, and then receive, from the user, one of (a) a key extraction instruction to extract search keys from each of the selected data files and (b) an output instruction to output each of the selected data files, the selective extracting unit may extract search keys from each of the selected data files when the file-selection receiving unit receives the key extraction instruction, the searching unit, every time when the file-selection receiving unit receives selection of one or a predetermined number of data files, may read the selected data files and store therein the read data files, and the data searching apparatus may further include: a result outputting unit operable to output the data files stored in the searching unit when the file-selection receiving unit receives the output instruction.

According to this, data files that may become output targets can be read and stored before the data files are selected as output targets. Therefore, the waiting time for the user, i.e., the time required between when data files are selected as output targets and when the data files are output, can be shortened.

Here, the search keys may be categorized in a plurality of fields, the selective extracting unit may extract search keys for each of the plurality of fields, from the data file selected in the file-selection receiving unit, and the searching unit may include: a search-key-list displaying unit operable to display a list of the search keys extracted for each of the plurality of fields by the extracting unit; a key-selection receiving unit operable to receive, from the user, selection of at least one search key from the list displayed by the search-key-list displaying unit; and a selective searching unit operable to search the database for at least one data file that includes the search key selected in the key-selection receiving unit.

Here, the search keys may be categorized in a plurality of fields, the extracting unit may extract search keys for each of the plurality of fields, from the data file that is a search result by the searching unit, and the searching unit may include: a search-key-list displaying unit operable to display a list of the search keys extracted for each of the plurality of fields by the extracting unit; a key-selection receiving unit operable to receive, from the user, selection of at least one search key from the list displayed by the search-key-list displaying unit; and a selective searching unit operable to search the database for at least one data file that includes the search key selected in the key-selection receiving unit.

According to these, the apparatus can search for data files including only search keys selected by the user. Therefore, the user can easily find appropriate search conditions.

Also, input of such search keys can be made by a simple user operation of selecting the search keys with reference to the list of the extracted search keys corresponding to the plurality of fields. This represents improved operability and enables easy refining of search. Accordingly, even inexpert users can easily set search conditions.

Here, the data searching apparatus may search for a patent data file, and one type of the search keys may be a keyword, the searching unit may search the database for at least one patent data file that includes a keyword, the extracting unit may extract a plurality of frequently-used keywords, from the patent data file that is a search result by the searching unit, and the searching unit may further search the database for at least one patent data file that includes at least one of the frequently-used keywords extracted by the extracting unit.

According to this, the apparatus can search for patent data files including keywords, extract frequently-used keywords from the patent data files that have resulted from the searching, and search for patent data files including some or all of the extracted keywords. Therefore, the apparatus can often use, in searching for desired patent data files, keywords closely related to the desired patent data files.

Also, the data searching apparatus may search for a patent data file, and one type of the search keys may be an IPC symbol, where "IPC" represents the International Patent Classification, the searching unit may search the database for at least one patent data file that includes an IPC symbol, the extracting unit may extract a plurality of IPC symbols, from the patent data file that is a search result by the searching unit, and the searching unit may further search the database for at least one patent data file that includes at least one of the IPC symbols extracted by the extracting unit.

According to this, the apparatus can search for patent data files including IPC symbols, extract IPC symbols from the patent data files that have resulted from the searching, and search for patent data files including some or all of the extracted IPC symbols. Therefore, the apparatus can often use, in searching for desired patent data files, IPC symbols closely related to the desired patent data files.

Also, the data searching apparatus may search for a patent data file, and one type of the search keys may be an F-term, where "F-term" represents the File Forming Term, the searching unit may search the database for at least one patent data file that includes an F-term, the extracting unit may extract a plurality of F-terms, from the patent data file that is a search result by the searching unit, and the searching unit may further search the database for at least one patent data file that includes at least one of the F-terms extracted by the extracting unit.

According to this, the apparatus can search for patent data files including F-terms, extract F-terms from the patent data files that have resulted from the searching, and search for patent data files including some or all of the extracted F-terms. Therefore, the apparatus can often use, in searching for desired patent data files, F-terms closely related to the desired patent data files.

Also, the data searching apparatus may search for a patent data file, and three types of the search keys may be an IPC symbol, an F-term, and a keyword, where "IPC" represents the International Patent Classification, and "F-term" represents the File Forming Term, the receiving unit may receive, as search keys, at least one of IPC symbols, F-terms, and keywords, the searching unit may search the database for at least one patent data file that includes at least one of the search keys received by the receiving unit, the extracting unit may extract, as search keys, IPC symbols, F-terms, and frequently-used keywords, from the patent data file that is a search result by the searching unit, and the searching unit may further search the database for at least one patent data file that includes at least one of the search keys extracted by the extracting unit.

According to this, the apparatus can search for patent data files including IPC symbols, F-terms, and keywords, extract IPC symbols, F-terms, and frequently-used keywords, from the patent data files that have resulted from the searching, and search for patent data files including some or all of the extracted IPC symbols, F-terms, and frequently-used keywords. Therefore, the apparatus can often use, in searching for desired patent data files, IPC symbols, F-terms, and keywords, closely related to the desired patent data files.

### BRIEF DESCRIPTION OF THE DRAWINGS

These and other objects, advantages and features of the invention will become apparent from the following description thereof taken in conjunction with the accompanying drawings that illustrate a specific embodiment of the invention.

In the drawings:
FIG. 1 schematically shows a network including a search system relating to a preferred embodiment of the present invention;
FIG. 2 shows a detailed construction of the search system relating to the embodiment of the present invention;
FIG. 3 shows an example of a database stored in a patent-document-data storage unit 10;
FIG. 4 shows a display example of patent document data stored in the patent-document-data storage unit 10;
FIG. 5A schematically shows data of search conditions, transmitted from a search-condition inputting unit 43;
FIG. 5B schematically shows data of search conditions including the item "number of hits", transmitted from a patent-document searching unit 23;
FIG. 6A schematically shows data of a search result list transmitted from a search-result-list generating unit 24;
FIG. 6B schematically shows extraction target ID information or output target ID information transmitted from a file selecting unit 45;
FIG. 7A schematically shows data of a search key list for the IPC transmitted from a search-key-list generating unit 26;
FIG. 7B schematically shows data of a search key list for the F-term transmitted from the search-key-list generating unit 26;
FIG. 7C schematically shows data of a search key list for the Abstract transmitted from the search-key-list generating unit 26;
FIG. 8 shows a display example where an input-window displaying unit 42 displays a search condition input window on a monitor (not shown) of a user apparatus 40;
FIG. 9 shows a display example where a search-result-list displaying unit 44 displays a search result list window on the monitor of the user apparatus 40;
FIG. 10 shows a display example where a search-key-list displaying unit 46 displays a search key list window on the monitor of the user apparatus 40; and
FIG. 11 shows an operational procedure for patent database searching in the search system relating to the embodiment of the present invention.

### DESCRIPTION OF THE PREFERRED EMBODIMENT

### [Preferred Embodiment]

### <Overview>

A search system relating to a preferred embodiment of the present invention is described as a patent search system. In this search system, the user can set a search condition and search for patent documents using the set search condition, extract search keys from patent documents that have resulted from the searching, and perform next searching using the extracted search keys. In this system, the user can find an appropriate search condition in a relatively easy manner.

### <Construction>

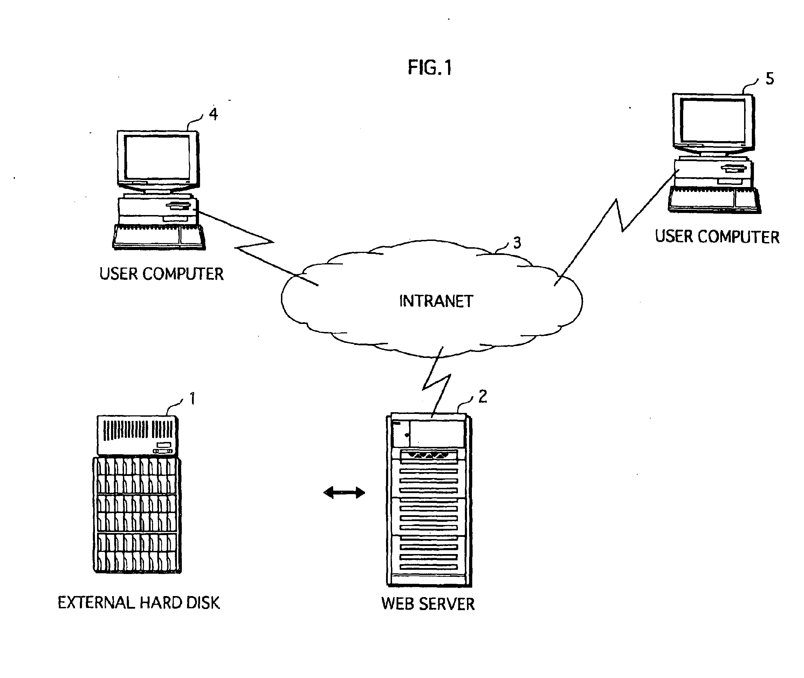

FIG. 1 schematically shows a network including the search system relating to the embodiment of the present invention.

The network shown in FIG. 1 includes an external hard disk 1, a Web server 2, an intranet 3, a user computer 4, and a user computer 5.

The external hard disk 1 stores various data including data of patent documents.

The Web server 2 is a computer managed by the search service provider. The Web server 2 searches the external hard disk 1 for pieces of patent document data stored therein, based on an instruction relating to search issued by the user computer 4 or the user computer 5, and transmits pieces of patent document data that have resulted from the searching (search results), to the user computer 4 or the user computer 5.

The intranet 3 is a local network for connecting limited users, i.e., users within a specific company.

The user computer 4 and the user computer 5 are Web browsers that can be used by the users to directly input and output data.

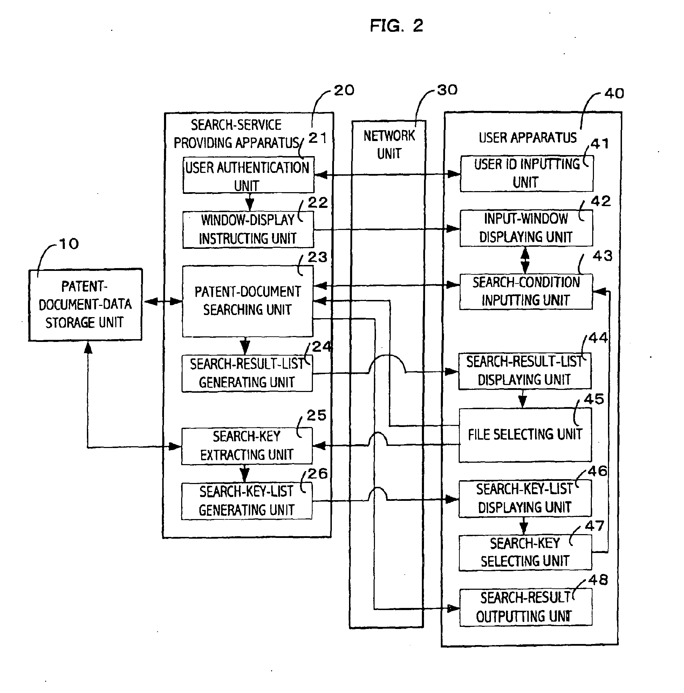

FIG. 2 shows a detailed construction of the search system relating to the preferred embodiment of the present invention.

The search system shown in FIG. 2 includes a patent-document-data storage unit 10, a search-service providing apparatus 20, a network unit 30, and a user apparatus 40.

The patent-document-data storage unit 10 is such a storage medium as an external hard disk equipped with a non-volatile storage medium. The patent-document-data storage unit 10 stores a database of pieces of patent document data as data files.

Here, each data file of patent document data stored in the patent-document-data storage unit 10 includes a plurality of search keys for providing clues to know the contents of the data file. For example, a data file of patent document data may include, as its search keys, the fields: data type indicating one of a patent, a utility model, a design, and a trademark; IPC; FI; F-term; application number; publication number; international application number; international publication number; registration number; priority application number; related patent application number; trial number; filing date; publication date; registration date; name of the inventor; name of the applicant; name of each right holder; title of the invention; and keyword.

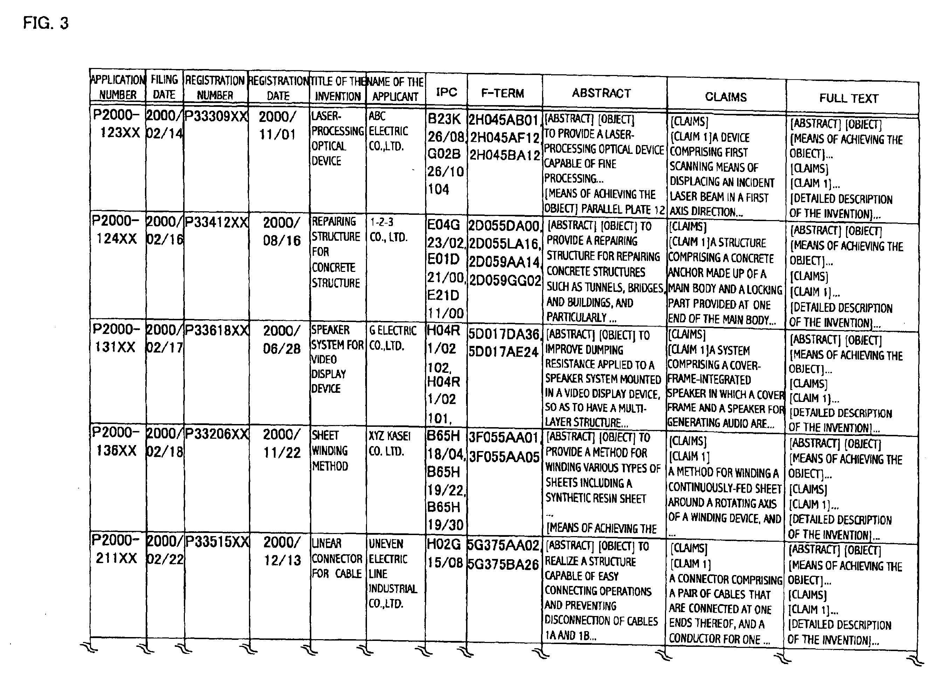

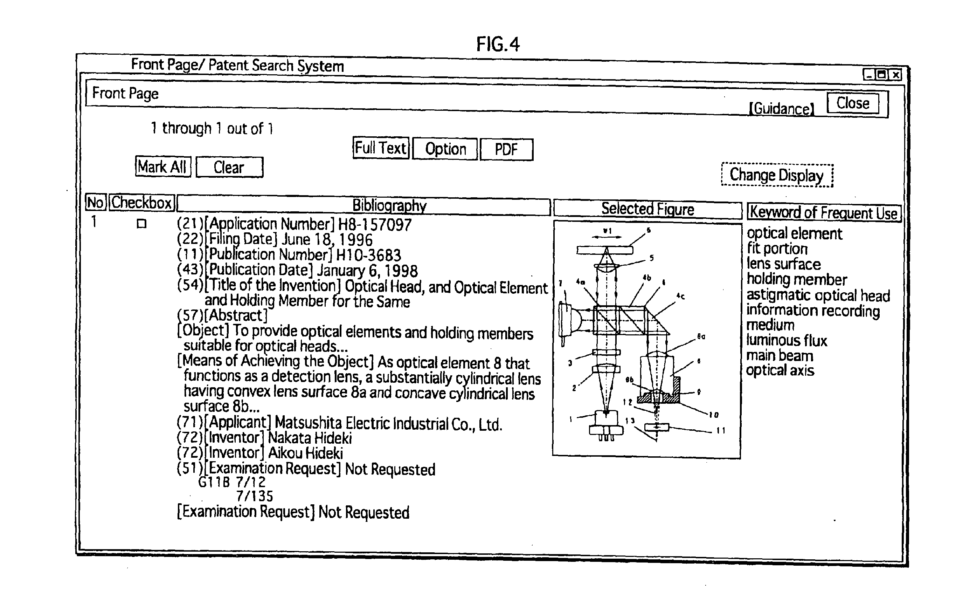

FIG. 3 shows an example of the database stored in the patent-document-data storage unit 10.

The database stored in FIG. 3 is composed of a plurality of records (pieces of patent document data), each of which corresponds to one patent application. One record includes data of each of the fields: application number; filing date; registration number; registration date; name of the invention; name of the applicant; IPC; F-term; abstract; claims; full text; etc. It should be noted here that the fields of the database should not be limited to the fields exemplified in Fig. 3, but actually may include bibliographic information such as information about the priority date and the examination request date, and management information such as information about the name of contact person and the cost.

FIG. 4 shows a display example of patent document data stored in the patent-document-data storage unit 10.

The search-service providing apparatus 20 is a Web server managed by the search service provider. The search-service providing apparatus 20 includes a user authentication unit 21, a window-display instructing unit 22, a patent-document searching unit 23, a search-result-list generating unit 24, a search-key extracting unit 25, and a search-key-list generating unit 26.

The network unit 30 is such a network as an intranet, and connects the search-service providing apparatus 20 and the user apparatus 40 to enable communication between the apparatuses.

The user apparatus 40 is a Web browser used by a user to directly input and output data. The user apparatus 40 includes a user ID inputting unit 41, an input-window displaying unit 42, a search-condition inputting unit 43, a search-result-list displaying unit 44, a file selecting unit 45, a search-key-list displaying unit 46, a search-key selecting unit 47, and a search-result outputting unit 48.

The user authentication unit 21 receives a user ID from the user ID inputting unit 41, and performs authentication of the user. When the user authentication is successful, the user authentication unit 21 gives permission to activate, to the window-display instructing unit 22. When the user authentication is unsuccessful, the user authentication unit 21 returns a message indicating unsuccessful user authentication to the user ID inputting unit 41.

When receiving the permission from the user authentication unit 21, the window-display instructing unit 22 instructs the input-window displaying unit 42 to display a window for inputting search conditions (hereafter referred to as a "search condition input window").

The patent-document searching unit 23 receives data of search conditions, i.e., search queries, from the search-condition inputting unit 43, and searches the patent-document-data storage unit 10 for pieces of patent document data that satisfy the received search conditions. The patent-document searching unit 23 transmits pieces of patent documents that have resulted from the searching, to the search-result-list generating unit 24. Also, the patent-document searching unit 23 counts the number of hits for each search query, i.e., the number of pieces of patent document data satisfying each search condition, and returns the number to the search-condition inputting unit 43. Also, the patent-document searching unit 23 receives output target ID information identifying pieces of patent document data to be output, from the file selecting unit 45, and searches for the pieces of patent document data to be output, using the received output target ID information. The patent-document searching unit 23 then transmits the pieces of patent document data to be output, to the search-result outputting unit 48.

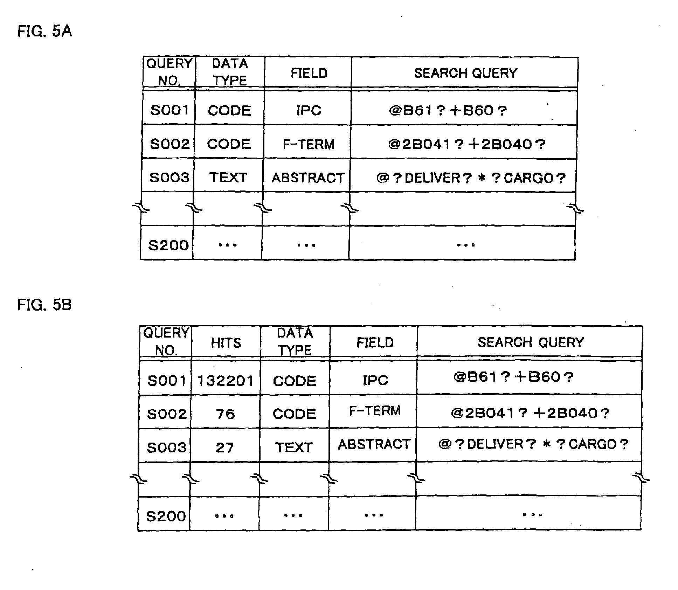

FIG. 5A schematically shows data of search conditions transmitted from the search-condition inputting unit 43.

As shown in FIG. 5A, the data of search conditions transmitted from the search-condition inputting unit 43 includes the items "query No." (S001, S002, S003, etc.), "data type" (CODE, CODE, TEXT, etc.), "field" (IPC, F-term, Abstract, etc.), and "search query" (@B61?+B60?, @2B041?+2B040?, @?deliver?*?cargo?, etc.). This data does not include the item "number of hits".

FIG. 5B schematically shows data of search conditions including the item "number of hits" transmitted from the patent-document searching unit 23.

As shown in FIG. 5B, the data including the item "number of hits" transmitted from the patent-document searching unit 23 has the same data structure as the data shown in FIG. 5A except that the item "number of hits" (132201, 76, 27, etc.) is additionally provided for each search query.

The search-result-list generating unit 24 generates a search result list, i.e., a list of pieces of patent document data that have resulted from the searching by the patent-document searching unit 23, and transmits data of the search result list to the search-result-list displaying unit 44.

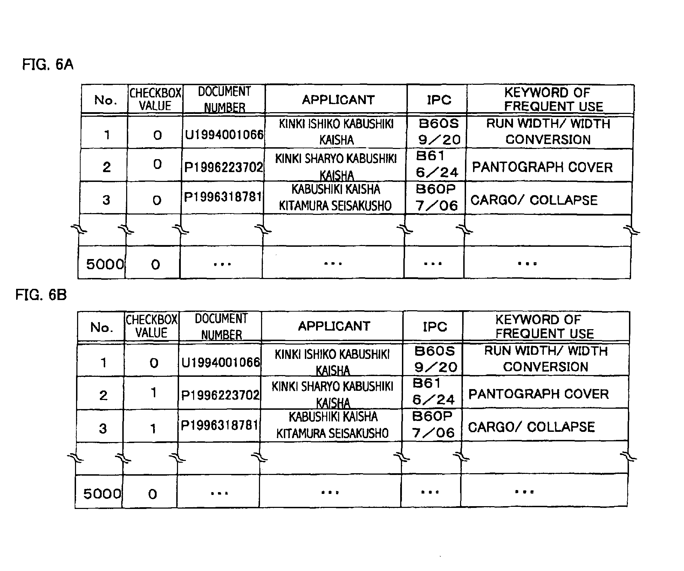

FIG. 6A schematically shows the data of the search result list transmitted from the search-result-list generating unit 24.

As shown in FIG. 6A, the data of the search result list includes the items "serial No." (1, 2, 3, etc.), "document number" (U1994001066, P1996223702, P1996318781, etc.), "checkbox value" (0, 0, 0, etc.), "applicant" (Kinki Ishiko Kabushiki Kaisha, Kinki Sharyo Kabushiki Kaisha, Kabushiki Kaisha Kitamura Seisakusho, etc. ), "IPC" (B60S 9/20, B61 6/24, B60P 7/06, etc.), and "keyword of frequent use" (run width/width conversion, pantograph cover, cargo collapse/ prevent, etc.).

FIG. 6B schematically shows extraction target ID information or output target ID information transmitted from the file selecting unit 45. The extraction target ID information identifies each piece of patent document data to be used to extract search keys from it (hereafter referred to as a "key extraction target"). The output target ID information identifies each piece of patent document data to be output (hereafter referred to as an "output target").

As shown in FIG. 6B, the extraction target ID information and the output target ID information transmitted from the file selecting unit 45 have the same data structure as the data shown in FIG. 6A except that the values of the item "checkbox value" are changed to 0, 1, and 1.

Here, the user selects pieces of patent document data one after another by marking the corresponding checkbox, and after the selection, clicks one of a front page display icon, a full text display icon, and an option icon, to determine whether the selected pieces of patent document data are output targets or key extraction targets.

This means that whether a selected piece of patent document data is an output target or a key extraction target is unknown to the user apparatus at the time when the user marks the corresponding checkbox.

However, if the user first clicks an icon to determine whether selection is for an output target or a key extraction target and then selects pieces of patent document data and starts searching for these selected pieces of patent document data, the searching for a large number of pieces of patent document data takes a long time. Such a long waiting time is inconvenient for the user.

In view of this, the output target ID information may be transmitted from the file selecting unit 45 to the patent-document searching unit 23 every time when one or a certain number of pieces of patent document data are selected by the user. In this case, the patent-document searching unit 23 starts searching for the selected pieces of patent document data before the user clicks the icon. Here, the patent-document searching unit 23 may store pieces of patent document data that have resulted from the searching into a general-purpose memory or the like within the search-service providing apparatus 20, or may transmit the resulting pieces of patent document data to the user apparatus 40. By doing so, the waiting time for the user, i.e., the time required between when the icon is clicked and when the pieces of patent document data are output, can be shortened.

The search-key extracting unit 25 receives the extraction target ID information from the file selecting unit 45, and extracts search keys from the pieces of patent document data identified by the extraction target ID information. As one example, for one piece of patent document data that is a key extraction target, the search-key extracting unit 25 may extract the most frequently-used ten of the search keys for each of the fields IPC, F-term, and Abstract (keyword). It should be noted here that the search-key-list generating unit 26 includes a stop-word dictionary. With the use of the stop-word dictionary, the search-key-list generating unit 26 avoids employing, as search keys appearing in an Abstract, a full text, etc., meaningless stop words such as "claim", "carry out", "to do", "apparatus", which frequently appear in patent documents.

The search-key-list generating unit 26 generates a list of search keys extracted by the search-key extracting unit 25, and transmits data of the search key list to the search-key-list displaying unit 46. As one example, the search-key-list generating unit 26 generates, for each of the fields IPC, F-term, and Abstract, a list of the frequently-used top ten search keys, which are given serial numbers 1 to 10.

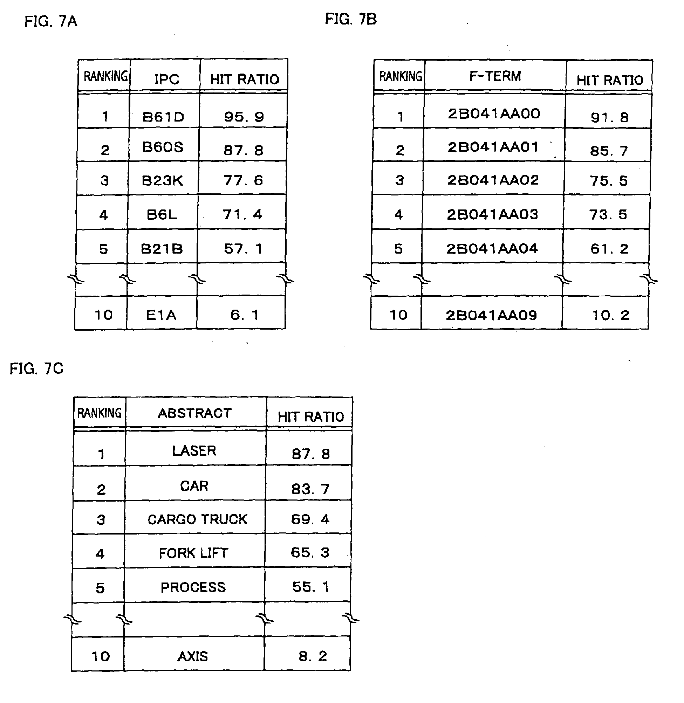

FIG. 7A schematically shows data of the search key list for the IPC transmitted from the search-key-list generating unit 26.

FIG. 7B schematically shows data of the search key list for the F-term transmitted from the search-key-list generating unit 26.

FIG. 7C schematically shows data of the search key list for the Abstract transmitted from the search-key-list generating unit 26.

As shown in FIG. 7A, the data of the search key list for the IPC transmitted from the search-key-list generating unit 26 includes the items "ranking" (1 to 10), "IPC", and "hit ratio". The hit ratio for the IPC is a percentage obtained by dividing the number of pieces of patent document data including the corresponding IPC by the number of all the pieces of patent document data that are selected as key extraction targets.

As shown in FIG. 7B, the data of the search key list for the F-term transmitted from the search-key-list generating unit 26 includes the items "ranking" (1 to 10), "F-term", and "hit ratio". The hit ratio for the F-term is a percentage obtained by dividing the number of pieces of patent document data including the corresponding F-term by the number of all the pieces of patent document data that are selected as key extraction targets.

As shown in FIG. 7C, the data of the search key list for the Abstract transmitted from the search-key-list generating unit 26 includes the items "ranking" (1 to 10), "keyword in Abstract", and "hit ratio". The hit ratio for the Abstract is a percentage obtained by dividing the number of pieces of patent document data including the corresponding keyword by the number of all the pieces of patent document data that are selected as key extraction targets.

The user ID inputting unit 41 receives input of a user ID from the user, and transmits the received user ID to the search-service providing apparatus 20. When receiving a message indicating unsuccessful user authentication, the user ID inputting unit 41 displays the message to the user.

The input-window displaying unit 42 receives an instruction to display a search condition input window from the window-display instructing unit 22, and displays the search condition input window, to urge the user to input search conditions.

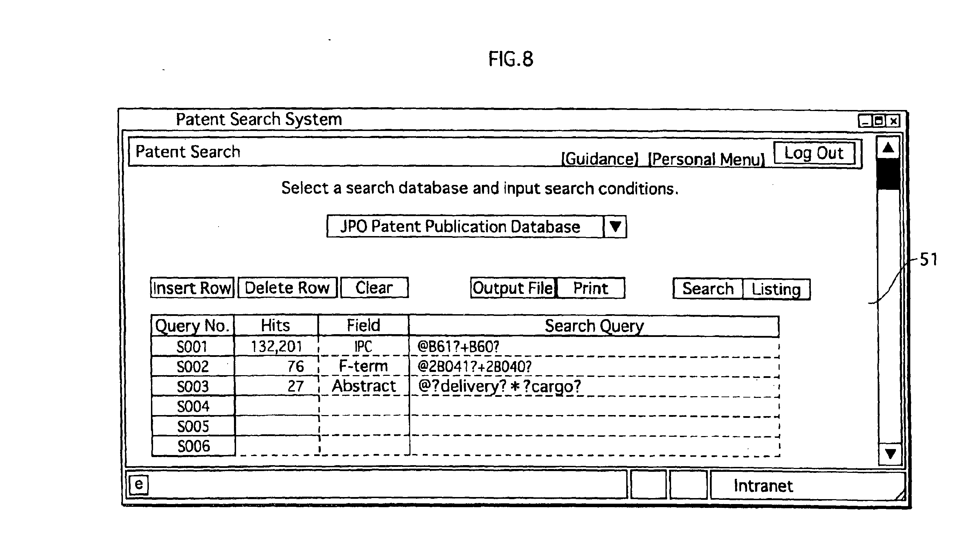

FIG. 8 shows a display example where the input-window displaying unit 42 displays the search condition input window on a monitor (not illustrated) of the user apparatus 40.

The search-condition inputting unit 43 receives input of search conditions from the user, and transmits data of the search conditions to the patent-document searching unit 23. Also, the search-condition inputting unit 43 receives the number of hits , i.e., the number of pieces of patent document data satisfying each search condition, from the patent-document searching unit 23, and transmits the number of hits for each search condition to the input-window displaying unit 42. The input-window displaying unit 42 additionally displays the number of hits for each search condition in the search condition input window.

To be specific, data of the search conditions to which the numbers of hits are added is transmitted from the patent-document searching unit 23 to the search-condition inputting unit 43. The transmitted data overwrites the data displayed in the search condition input window. In this way, the number of hits for each search condition is additionally displayed in the search condition input window.

As one example, the user refers to the search condition input window 51 shown in FIG. 8, and writes a search query for each of the fields (IPC, F-term, and Abstract in this example) in the search condition input window 51. In this way, the user inputs the search conditions.

The search-result-list displaying unit 44 receives data of the search result list, i.e., the list of pieces of patent document data that have resulted from the searching, from the search-result-list generating unit 24. The search-result-list displaying unit 44 displays the received list, to urge the user to select pieces of patent document data from the list.

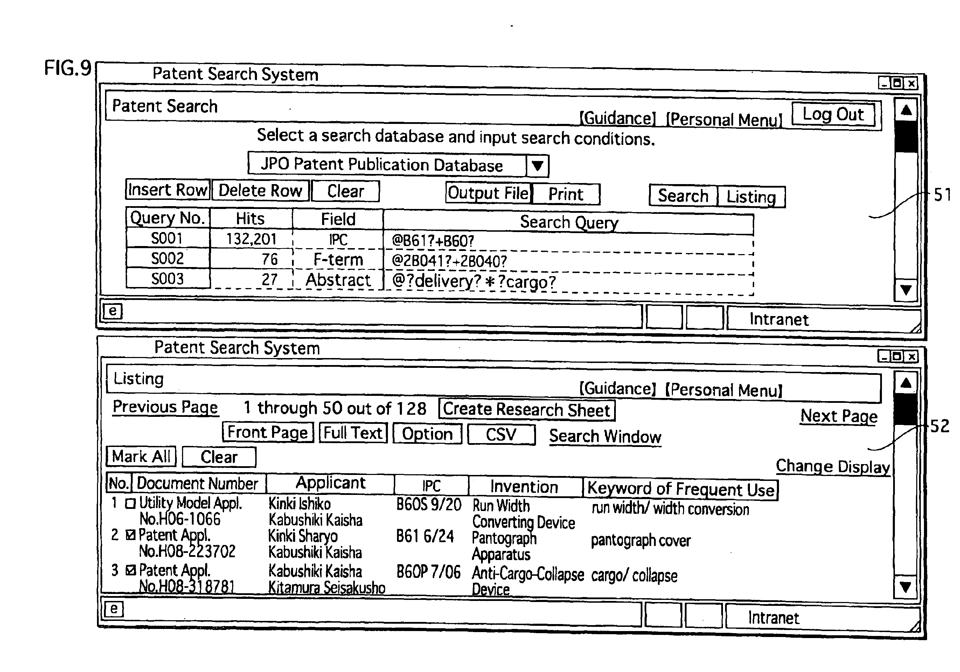

FIG. 9 shows a display example where the search-result-list displaying unit 44 displays a search result list window on the monitor of the user apparatus 40.

In FIG. 9, the search result list window 52 is displayed on the monitor where the search condition input window 51 shown in FIG. 8 is displayed. The user can switch the active window using a mouse or the like while referring to both the windows on the same monitor.

The file selecting unit 45 receives, from the user, selection of pieces of patent document data to be key extraction targets, and transmits extraction target ID information identifying the selected pieces of patent document data, to the search-key extracting unit 25. The file selecting unit 45 further receives, from the user, selection of pieces of patent document data to be output targets, and transmits output target ID information identifying the selected pieces of patent document data to the patent-document searching unit 23.

As one example, the user refers to the search result list window 52 shown in FIG. 9, and selects a piece of patent document data by marking the corresponding checkbox in the search result list window 52 using a mouse or the like.

The search-key-list displaying unit 46 receives data of the search key list from the search-key-list generating unit 26, and displays the search key list, to urge the user to select search keys from the list.

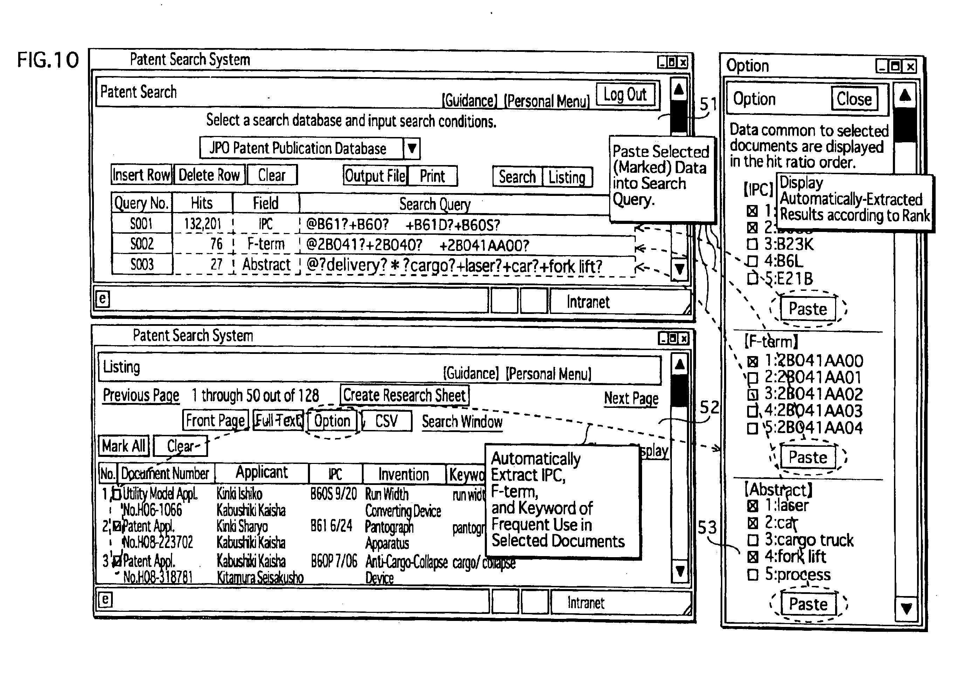

FIG. 10 shows a display example where the search-key-list displaying unit 46 displays the search key list window on the monitor of the user apparatus 40.

In FIG. 10, the search key list window 53 is displayed on the monitor where the search condition input window 51 and the search result list window 52 shown in FIG. 9 are displayed. The user can switch the active window using a mouse or the like while referring to the three windows on the same monitor.

Here, the search-key-list displaying unit 46 receives data of the list of the frequently-used top ten search keys for each of the fields shown in FIGS. 7A to 7C, and among them displays the frequently-used top five search keys for each of the fields.

The search-key selecting unit 47 receives, from the user, selection of search keys, and transmits the selected search keys to the search-condition inputting unit 43.

As one example, the user refers to the search key list window 53 shown in FIG. 10, and selects search keys each by marking the corresponding checkbox in the search key list window 53.

Here, the search-condition inputting unit 43 transmits new search conditions that include the search keys transmitted from the search-key selecting unit 47, to the patent-document searching unit 23.

As one example, the user clicks the paste button after selecting search keys for each field by marking the corresponding checkbox in the search key list window 53, so that the search-condition inputting unit 43 pastes the selected search keys into the corresponding search condition in the search condition input window 51.

The search-result outputting unit 48 receives pieces of patent document data from the patent-document searching unit 23, and outputs the received pieces of patent document data. As one example, the search-result outputting unit 48 displays the pieces of patent document data on the monitor of the user apparatus 40, or prints out the pieces of patent document data.

### <Operation>

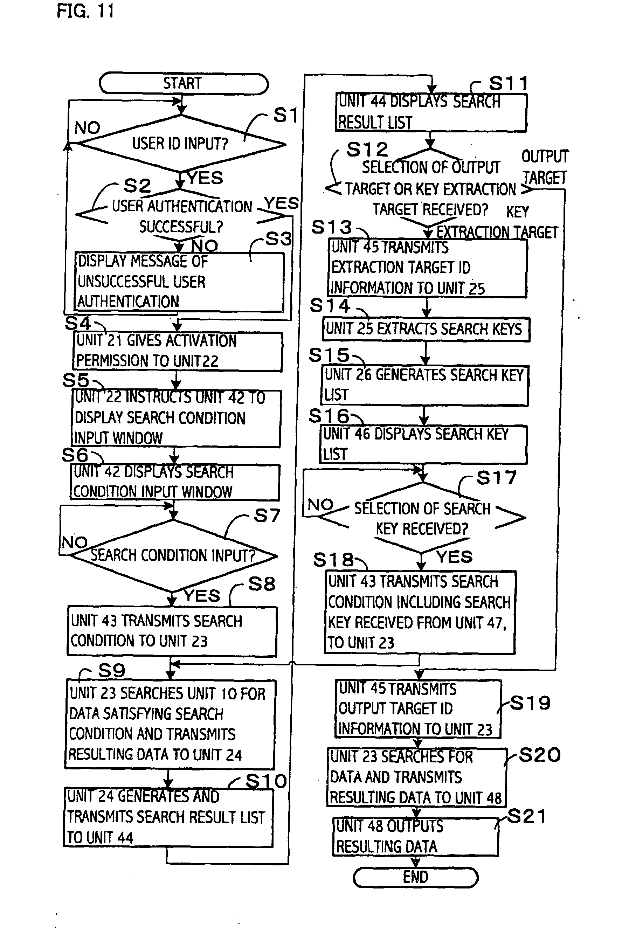

FIG. 11 shows an operational procedure for patent database searching in the search system relating to the preferred embodiment of the present invention.

The following describes the operational procedure for patent database searching with reference to FIG. 11.
(1) In the user apparatus 40, the user ID inputting unit 41 urges the user to input a user ID. Upon receipt of the user ID, the user ID inputting unit 41 transmits the user ID to the search-service providing apparatus 20 (Step S1).
(2) In the search-service providing apparatus 20, the user authentication unit 21 receives the user ID, and performs authentication of the user (step S2).
(3) When the user authentication is unsuccessful, the user authentication unit 21 returns a message indicating unsuccessful user authentication to the user apparatus 40, and the user apparatus 40 displays the message to the user (step S3).
(4) When the user authentication is successful, the user authentication unit 21 gives permission to activate, to the window-display instructing unit 22 (step S4).
(5) The window-display instructing unit 22 instructs the input-window displaying unit 42 to display the search condition input window (step S5).
(6) In the user apparatus 40, the input-window displaying unit 42 displays the search condition input window, to urge the user to input a search condition (step S6).
(7) The search-condition inputting unit 43 receives, from the user, input of the search condition (step S7).
(8) Upon recipe of input of a search condition from the user, the search-condition inputting unit 43 transmits the search condition to the patent-document searching unit 23 (step S8).
(9) In the search-service providing apparatus 20, the patent-document searching unit 23 receives the search condition, and searches for pieces of patent document data that satisfy the received search condition, and transmits pieces of patent document data that have resulted from the searching, to the search-result-list generating unit 24 (step S9).
(10) The search-result-list generating unit 24 generates a search result list of the pieces of patent document data that have resulted from the searching by the patent-document searching unit 23, and transmits the search result list to the search-result-list displaying unit 44 (step S10).
(11) In the user apparatus 40, the search-result-list displaying unit 44 receives the search result list and displays the received list, to urge the user to select a piece of patent document data from the list (step S11).
(12) The file selecting unit 45 receives, from the user, selection of a piece of patent document data to be a key extraction target or selection of a piece of patent document data to be an output target (step S12).
(13) When the file selecting unit 45 receives selection of a piece of patent document data to be a key extraction target, the file selecting unit 45 transmits extraction target ID information identifying the selected piece of patent document data, to the search-key extracting unit 25 (step S13).
(14) The search-key extracting unit 25 receives the extraction target ID information, and extracts search keys from the piece of patent document data identified by the extraction target ID information (step S14).
(15) The search-key-list generating unit 26 generates a list of the search keys extracted by the search-key extracting unit 25, and transmits the generated search key list to the search-key-list displaying unit 46 (step S15).
(16) In the user apparatus 40, the search-key-list displaying unit 46 receives the search key list and displays the received search key list, to urge the user to select a search key from the list (step S16).
(17) The search-key selecting unit 47 receives, from the user, selection of the search key, and transmits the selected search key to the search-condition inputting unit 43 (step S17).
(18) The search-condition inputting unit 43 transmits a new search condition including the search key transmitted from the search-key selecting unit 47, to the patent-document searching unit 23 (step S18).
(19) When the file selecting unit 45 receives selection of a piece of patent document data to be an output target, the file selecting unit 45 transmits output target ID information identifying the selected piece of patent document data, to the patent-document searching unit 23 (step S19).
(20) The patent-document searching unit 23 receives the output target ID information, searches for a piece of patent document data identified by the output target ID information, and transmits the piece of patent document data that has resulted from the searching, to the search-result outputting unit 48 (step S20).
(21) The search-result outputting unit 48 receives the resulting piece of patent document data, and outputs the received piece of patent document data (step S21).

According to the embodiment of the present invention described above, pieces of patent document data that have resulted from searching can be used to extract search keys from them, and then next searching can be performed using the extracted search keys. Therefore, the user can find appropriate search conditions in a relatively easy manner.

Although the present invention is described in the above embodiment by taking the patent search system for example, the present invention should not be limited to patent search systems, but may be any other search systems.

Although the embodiment of the present invention describes the case where a large number of functions are realized at the same time, these functions may be partially realized.

The embodiment of the present invention describes the case where a list of pieces of patent document data that have resulted from the searching is displayed for urging the user to select some of them, and then search keys are extracted from the selected pieces of patent document data. However, search keys may be extracted from all the pieces of patent document data that have resulted from the searching, without requiring the user to select some of the pieces of patent document data. In this case, the file selecting unit 45 is not required to receive, from the user, selection of pieces of patent document data to be key extraction targets. Also, the search-result-list displaying unit 44 is not required to display a list of pieces of patent document data for urging the user to select some of them as key extraction targets.

The embodiment of the present invention describes the case where a list of extracted search keys is displayed for urging the user to select some of them, and then next searching is performed using new search conditions including the selected search keys. However, the next searching may be performed using new search conditions automatically including several most frequently-used search keys, without requiring the user to select some of the extracted search keys. In this case, the search-key selecting unit 47 is not required to receive, from the user, selection of search keys. Also, the search-key-list displaying unit 46 is not required to display the list of search keys for urging the user to select some of them.

Although the present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

## Claims

1. A data searching apparatus that searches a database of data files for a desired data file, based on a search condition set by a user, each data file including a plurality of search keys for providing clues to know data file contents, comprising:
a receiving unit operable to receive a search condition from the user;
a searching unit operable to search the database for at least one data file that satisfies the search condition received by the receiving unit; and
an extracting unit operable to extract a plurality of search keys, from the data file that is a search result by the searching unit,
wherein the searching unit further searches the database for at least one data file that includes at least one of the search keys extracted by the extracting unit.

2. The data searching apparatus of Claim 1, wherein the extracting unit includes:
a data-file-list displaying unit operable to display a list of data files that are search results by the searching unit;
a file-selection receiving unit operable to receive, from the user, selection of a data file from the list displayed by the data-file-list displaying unit; and
a selective extracting unit operable to extract search keys, from the data file selected in the file-selection receiving unit.

3. The data searching apparatus of Claim 2, wherein
the file-selection receiving unit receives, from the user, selection of a plurality of data files one after another from the list displayed by the data- f ile-list displaying unit , and then receives, from the user, one of (a) a key extraction instruction to extract search keys from each of the selected data files and (b) an output instruction to output each of the selected data files,
the selective extracting unit extracts search keys from each of the selected data files when the file-selection receiving unit receives the key extraction instruction,
the searching unit, every time when the file-selection receiving unit receives selection of one or a predetermined number of data files, reads the selected data files and stores therein the read data files, and
the data searching apparatus further comprises:
a result outputting unit operable to output the data files stored in the searching unit when the file-selection receiving unit receives the output instruction.

4. The data searching apparatus of Claim 2, wherein the search keys are categorized in a plurality of fields,
the selective extracting unit extracts search keys for each of the plurality of fields, from the data file selected in the file-selection receiving unit, and
the searching unit includes:
a search-key-list displaying unit operable to display a list of the search keys extracted for each of the plurality of fields by the extracting unit;
a key-selection receiving unit operable to receive, from the user, selection of at least one search key from the list displayed by the search-key-list displaying unit; and
a selective searching unit operable to search the database for at least one data file that includes the search key selected in the key-selection receiving unit.

5. The data searching apparatus of Claim 1, wherein the search keys are categorized in a plurality of fields,
the extracting unit extracts search keys for each of the plurality of fields, from the data file that is a search result by the searching unit, and
the searching unit includes:
a search-key-list displaying unit operable to display a list of the search keys extracted for each of the plurality of fields by the extracting unit;
a key-selection receiving unit operable to receive, from the user, selection of at least one search key from the list displayed by the search-key-list displaying unit; and
a selective searching unit operable to search the database for at least one data file that includes the search key selected in the key-selection receiving unit.

6. The data searching apparatus of Claim 1 that searches for a patent data file, wherein
one type of the search keys is a keyword,
the searching unit searches the database for at least one patent data file that includes a keyword,
the extracting unit extracts a plurality of frequently-used keywords, from the patent data file that is a search result by the searching unit, and
the searching unit further searches the database for at least one patent data file that includes at least one of the frequently-used keywords extracted by the extracting unit.

7. The data searching apparatus of Claim 1 that searches for a patent data file, wherein
one type of the search keys is an IPC symbol, where "IPC" represents the International Patent Classification,
the searching unit searches the database for at least one patent data file that includes an IPC symbol,
the extracting unit extracts a plurality of IPC symbols, from the patent data file that is a search result by the searching unit, and
the searching unit further searches the database for at least one patent data file that includes at least one of the IPC symbols extracted by the extracting unit.

8. The data searching apparatus of Claim 1 that searches for a patent data file, wherein
one type of the search keys is an F-term, where "F-term" represents the File Forming Term,
the searching unit searches the database for at least one patent data file that includes an F-term,
the extracting unit extracts a plurality of F-terms, from the patent data file that is a search result by the searching unit, and
the searching unit further searches the database for at least one patent data file that includes at least one of the F-terms extracted by the extracting unit.

9. The data searching apparatus of Claim 1 that searches for a patent data file, wherein
three types of the search keys are an IPC symbol, an F-term, and a keyword, where "IPC" represents the International Patent Classification, and "F-term" represents the File Forming Term,
the receiving unit receives, as search keys, at least one of IPC symbols, F-terms, and keywords,
the searching unit searches the database for at least one patent data file that includes at least one of the search keys received by the receiving unit,
the extracting unit extracts, as search keys, IPC symbols, F-terms, and frequently-used keywords, from the patent data file that is a search result by the searching unit, and
the searching unit further searches the database for at least one patent data file that includes at least one of the search keys extracted by the extracting unit.

10. A data searching method for searching a database of data files for a desired data file, based on a search condition set by a user, each data file including a plurality of search keys for providing clues to know data file contents, the method comprising:
a receiving step of receiving a search condition from the user;
a searching step of searching the database for at least one data file that satisfies the search condition received in the receiving step; and
an extracting step of extracting a plurality of search keys, from the data file that is a search result in the searching step,
wherein in the searching step, the database is further searched for at least one data file that includes at least one of the search keys extracted in the extracting step.

11. A computer program to be executed on a computer for searching a database of data files for a desired data file, based on a search condition set by a user, each data file including a plurality of search keys for providing clues to know data file contents, the program comprising:
a receiving step of receiving a search condition from the user;
a searching step of searching the database for at least one data file that satisfies the search condition received in the receiving step; and
an extracting step of extracting a plurality of search keys, from the data file that is a search result in the searching step,
wherein in the searching step, the database is further searched for at least one data file that includes at least one of the search keys extracted in the extracting step.
